# EUROPEAN PATENT APPLICATION

(11) **EP 4 624 246 A1**
(43) Date of publication of application: **01.10.2025**
(21) Application number: 25163016.6
(22) Date of filing: 11.03.2025
(51) Int. Cl.: B60N 2/28

(54) **CHILD RESTRAINT**

(30) Priority: 12.03.2024 US 202463564103 P
(71) Applicant: Dorel Juvenile Group, Inc., Foxborough MA 02035 (US)
(72) Inventor: Nakhla, Said S., Daphne, AL 36526 (US); Bonta, Derek, Foxboro, MA 02035 (US); Keiser, Darrin, Foxboro, MA 02035 (US); Mason, Grant. M., Wrentham, MA 02093 (US)
(74) Representative: Veldman-Dijkers, Cornelia G. C.

(57) **Abstract**

A child restraint includes a seat base adapted to rest on a vehicle seat for transportation in a vehicle and a juvenile seat coupled to the seat base and adapted to hold and secure a child for transportation in the vehicle. The juvenile seat is movable relative to the seat base from a travel position overlying the seat base to an ingress-egress position at least partially offset from the seat base.

## Description

### PRIORITY CLAIM

This application claims priority under 35 U.S.C. § 119(e) to U.S. Provisional Patent Application No. 63/564,103, filed March 12, 2024, which is expressly incorporated by reference herein in its entirety.

### BACKGROUND

The present disclosure relates to a child safety device, and particularly to a child restraint. More particularly, the present disclosure relates to a child restraint for use in a vehicle.

### SUMMARY

According to the present disclosure, a child restraint includes a seat base and a juvenile seat secured to the seat base. The seat base is adapted to rest on a vehicle seat for transportation in a vehicle. The juvenile seat is coupled to the seat base and is adapted to hold and secure a child for transportation in the vehicle.

In illustrative embodiments, the child restraint further includes a juvenile-seat support coupled to the seat base and movable relative to the seat base from a stored position to a deployed position when the juvenile seat is in the ingress-egress position. In the stored position, the juvenile-seat support is at least partially received in a storage space formed in the seat base. In the deployed position, the juvenile-seat support extends away from the seat base and underlies a portion of the juvenile seat spaced from the seat base to support the juvenile seat while the juvenile seat is in the ingress-egress position.

In illustrative embodiments, the juvenile seat is pivotable relative to the seat base about at least one axis offset laterally from a front-to-back centerline of the seat base to move the juvenile seat and the child seated in the juvenile seat from a travel position to an ingress-egress position. In the travel position, the juvenile seat is in a forward-facing orientation or a rearward-facing orientation and overlies the seat base inside a cabin of the vehicle. In the ingress-egress position, the juvenile seat is shifted relative to the seat base to a location at least partially offset from the seat base and toward a door of the vehicle so that a caregiver can easily place the child into the juvenile seat or remove the child from the juvenile seat.

Additional features of the present disclosure will become apparent to those skilled in the art upon consideration of illustrative embodiments exemplifying the best mode of carrying out the disclosure as presently perceived.

### BRIEF DESCRIPTIONS OF THE DRAWINGS

The detailed description particularly refers to the accompanying figures in which:

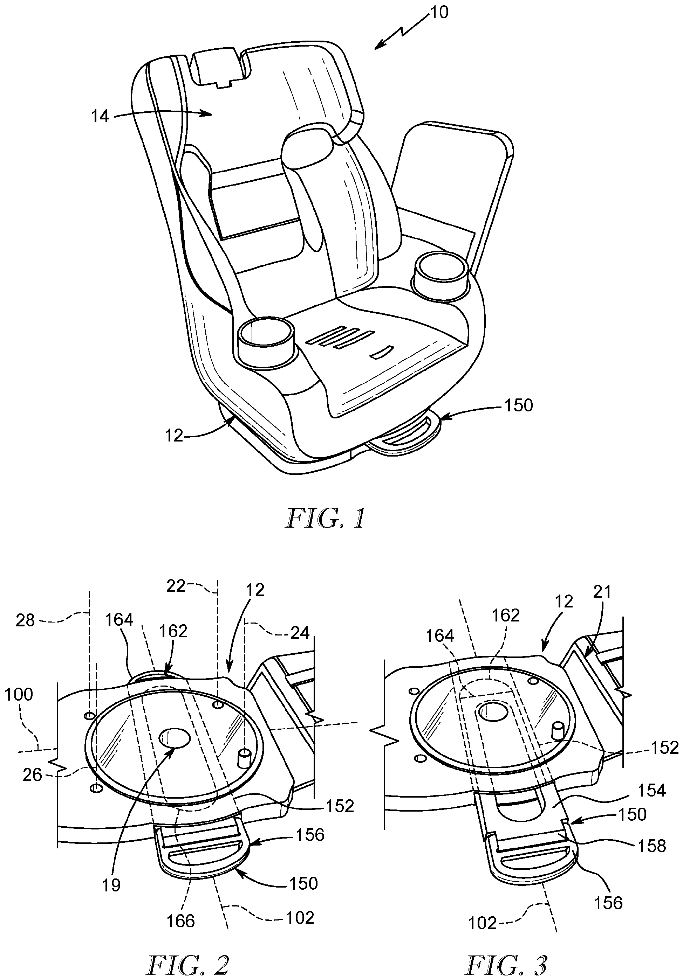

Fig. 1 is a perspective view of a child restraint including a seat base adapted to rest on an underlying vehicle seat and a juvenile seat formed to include a child-receiving space configured to hold a child for transportation in a vehicle, showing the juvenile seat in an ingress-egress position in which the juvenile seat is shifted sideways away from the seat base to position the child closer to an open door of the vehicle to facilitate child installation into the juvenile seat or child removal from the juvenile seat while the juvenile seat is supported in the ingress-egress position by a juvenile-seat support deployed from the seat base and underlying the juvenile seat in the ingress-egress position;
Fig. 2 is a perspective view of the seat base with the juvenile seat hidden to show the juvenile-seat support in a stored position at least partially received in a storage space formed in the seat base;
Fig. 3 is a perspective view of the seat base with the juvenile seat hidden and showing the juvenile-seat support in a deployed position after being translated relative to the seat base and the juvenile seat along a lateral centerline of the seat base to increase a cumulative width of the seat base and the juvenile-seat support while the juvenile seat is in the ingress-egress position and at least partially offset from a front-to-back centerline of the seat base;
Fig. 4 is a perspective view showing the juvenile-seat support including a support body, a first body extension coupled to a first end of the support body, and a second body extension coupled to an opposite second end of the support body, and showing each body extension being pivotable relative to the support body to close a gap between the juvenile-seat support and the juvenile seat when the juvenile seat is in the ingress-egress position;
Fig. 5 is a perspective view showing the juvenile seat in a travel position and showing the juvenile-seat support in the stored position;
Fig. 6 is a perspective view showing the juvenile seat in the travel position and showing the juvenile-seat support in the deployed position; and
Fig. 7 is a perspective view showing the juvenile-seat support deployed and supporting the juvenile seat in the ingress-egress position.

### DETAILED DESCRIPTION

A child restraint 10 includes a seat base 12 and a juvenile seat 14 coupled to the seat base 12. Juvenile seat 14 is adapted to hold and secure a child for transportation in a vehicle as shown in Figs. 1-7. The juvenile seat 14 is pivotable relative to the seat base 12 to move the juvenile seat 14 and the child seated in the juvenile seat 14 from a travel position inside a cabin of the vehicle to an ingress-egress position that is arranged to face toward a door of the vehicle and extend toward the door. In some embodiments, the juvenile seat 14 extends at least partially outside of a door of the vehicle when in the ingress-egress position. When the juvenile seat 14 is partially outside of the vehicle door, a caregiver can more easily place or remove the child in and out of the juvenile seat 14 without leaning through the vehicle door and into the vehicle cabin.

The juvenile seat 14 is pivotable relative to at least a portion of the seat base 12 by multi-axis pivoting means incorporated in the seat base 12. The multi-axis pivoting means allows the juvenile seat 14 to pivot about multiple axes 22, 24, 26, 28 between up to four arrangements depending on the size of the child seated on the juvenile seat 14 and the side of the vehicle that the child restraint 10 is installed. The pivoting means allows the juvenile seat 14 to move relative to the seat base 12 between a forward-facing arrangement in which the juvenile seat 14 and the child face forward in the vehicle for relatively larger children, and a rearward-facing arrangement in which the juvenile seat 14 and the child face rearward in the vehicle for relatively smaller children.

The pivoting means also allow the juvenile seat 14 to move relative to the seat base 12 to assume a first ingress-egress position in which the juvenile seat 14 and the child faces laterally or sideways toward the driver side of the vehicle, and a second ingress-egress position in which the juvenile seat 14 and child faces laterally or sideways toward the passenger side of the vehicle. One out of up to four total pivot axes 22, 24, 26, 28 can be selected and established by reconfiguring the pivoting means so that the juvenile seat 14 is able to pivot from either the forward-facing arrangement or the rearward-facing arrangement to either the first or second ingress-egress position. Each of the axes 22, 24, 26, 28 is offset from a front-to-back centerline 100 of the seat base 12 so that pivoting about each axis 22, 24, 26, 28 causes the juvenile seat 14 to shift laterally away from the seat base 12 toward the open door of the vehicle.

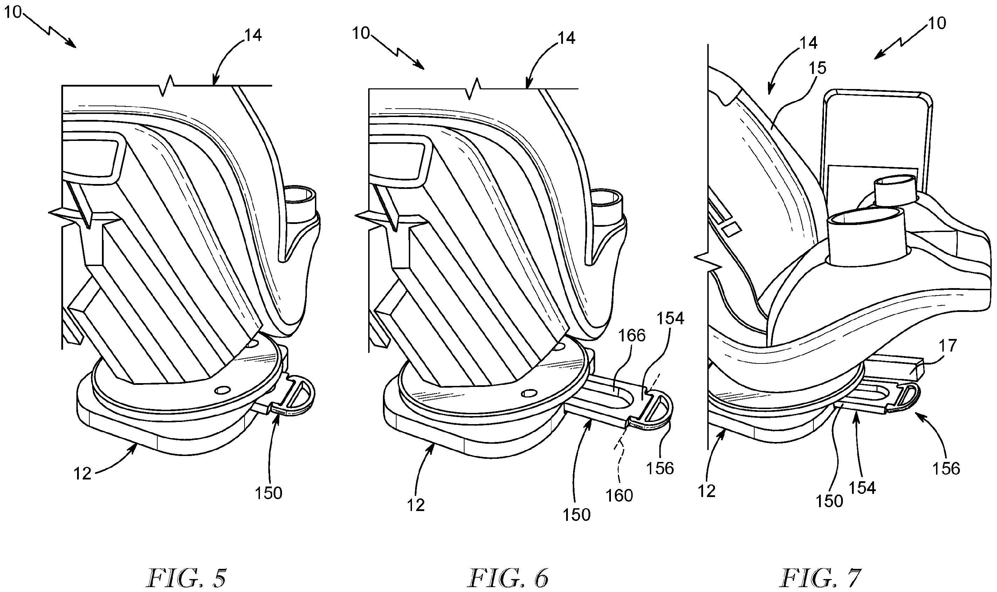

In illustrative embodiments, the child restraint 10 further includes a juvenile-seat support 150, as shown Figs. 2 and 3, configured to support the juvenile seat 14 while the juvenile seat 14 is in the first or second ingress-egress positions as shown in Fig. 7. The juvenile-seat support 150 is coupled to the seat base 12 and is configured to move relative to the seat base 12 between a stored position, as shown in Fig. 2, to a deployed position, as shown in Fig. 3. In the stored position, the juvenile-seat support 150 is stored in a cavity or space 152 formed in the seat base 12. In the deployed position, at least a portion of the juvenile-seat support 150 extends from the cavity or space 152 laterally away from the seat base 12 with the juvenile seat 14 while the child restraint 10 is in the first or second ingress-egress position. The juvenile-seat support 150 underlies a portion of the juvenile seat 14 while the child restraint 10 is in the first or second ingress-egress position to block the child restraint 10 from tipping out of the door of the vehicle while the juvenile seat 14 is in the ingress-egress position.

The juvenile-seat support 150 includes a support body 154 and a body extension 156 as shown in Figs. 2-4. The support body 154 is coupled to the seat base 12 and is formed as a plank-like structure. The body extension 156 is coupled to a distal end 158 of the support body 154. The body extension 154 is configured to fill a space between an underside of the juvenile seat 14 and a topside of the support body 154 to engage the underside of the juvenile seat 14 and support the juvenile seat 14 above the support body 154 in the first or second ingress-egress position. In some embodiments, the body extension 156 may be omitted and the underside of the juvenile seat 14 may directly engage the support body 154 in the first or second ingress-egress position.

The support body 154 and the body extension 156 are configured to translate or slide relative to the seat base 12 and the juvenile seat 14 along a lateral centerline 102 of the seat base 12 between the stored position and the deployed position in the illustrative embodiment as shown in Figs. 2 and 3. At least the support body 154 is normally withdrawn in the cavity 152 formed in the seat base 12 in the travel position to minimize a width of the seat base 12. The body extension 156 may reside outside of the cavity 152 in the stored position and provide a handgrip for a user to grasp to change the juvenile-seat support 150 from the stored position to the deployed position. The support body 154 and the body extension 156 extend from the cavity 152 in the deployed position such that the seat base 12 and the juvenile-seat support 150 define a second width greater than the width of the seat base 12 when the juvenile-seat support 150 is in the stored position. In other embodiments, the support body 154 and the body extension 156 attached thereto may pivot or fold out from the seat base 12 to the deployed position.

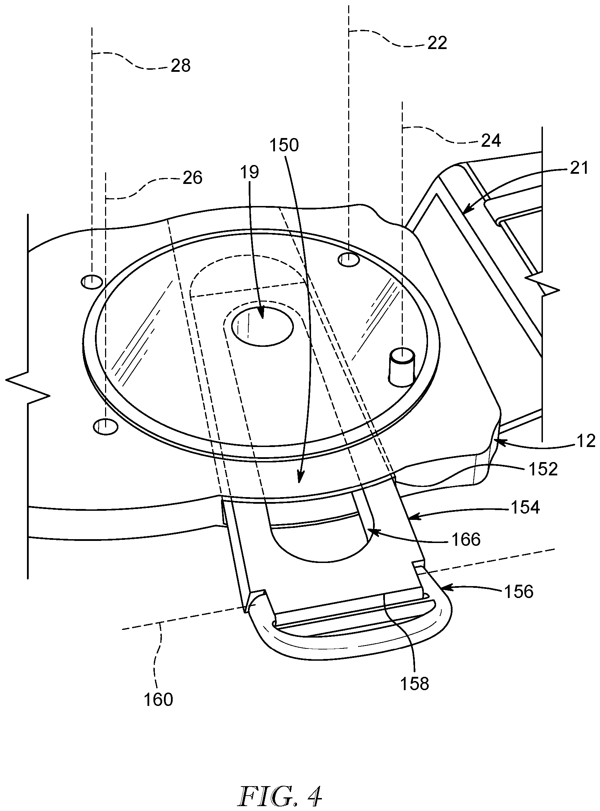

The body extension 156 is pivotable relative to the support body 154 about an extension pivot axis 160 from a first position arranged substantially parallel with the support body 154, as shown in Figs. 2 and 3, to a second position arranged at an angle relative to the support body 154, as shown in Figs. 4 and 7. In the first position, the body extension 156 is spaced apart from the juvenile seat 14. In the second position, the body extension 156 engages the underside of the juvenile seat 14 to support the juvenile seat 14 in one of the ingress-egress positions. The angle may be at or about 90 degrees relative to the support body 154 (i.e. within 15 degrees from 90 degrees), or any other suitable angle.

In the illustrative embodiment, the support body 154 can translate in both lateral directions to assume the deployed position on both lateral sides of the seat base 12. The juvenile-seat support 150 includes a second body extension 162 coupled to an opposite end 164 of the body support 154 to body extension 156. The second body extension 162 is substantially similar to body extension 156 and is configured to support the juvenile seat 14 when the juvenile seat 14 is in the second ingress-egress position.

The support body 154 is formed to include a slot 166 that receives a structure of the seat base 12 to block complete separation of the juvenile-seat support 150 from the cavity 152, but that allows lateral translation of the juvenile-seat support 150 to the deployed position on both lateral sides of the seat base 12. In the illustrative embodiment, the seat base 12 includes a central post 19 that extends through the slot 166. A first end of the slot 166 receives the post 19 when the juvenile seat support 150 is deployed to a first lateral side of the seat base 12 and an opposite second end of the slot 166 receives the post 19 when the juvenile-seat support 150 is deployed to a second lateral side of the seat base 12. Illustratively, when one of the body extensions 156, 162 is in the second position engaged with the juvenile seat 14, the other of the body extensions 156, 162 is in the first position within the cavity 152. In other embodiments, each body extension 156, 162 can be attached to a corresponding body support that are movable independently of one another between stored and deployed positions.

The juvenile seat 14 may include a seat shell 15 and a seat motion-blocker 17 coupled to the seat shell 15 and at least partially providing an underside of the juvenile seat 14 as shown in Fig. 7. The seat shell 15 defines a child-receiving space configured to receive a child. The seat-motion blocker 17 extends in a forward direction away from the seat shell 15. The seat-motion blocker 17 and the juvenile-seat support 150 extend alongside one another from the seat base 12 in the lateral direction and the juvenile seat support 150 engages the seat-motion blocker 17 in the deployed position. The seat-motion blocker 17 is also configured to interlock with a retaining flange 21 included in the seat base 12 to block movement of the juvenile seat 14 relative to the seat base 12 in the travel position.

Although the present disclosure of the child restraint 10 includes pivoting means that allows pivoting of the juvenile seat 14 relative to the seat base 12, other movements of the juvenile seat 14 relative to the seat base 12 are also possible. In some embodiments, for example, the juvenile seat 14 may slide or translate relative to the seat base 12 from the travel position to the ingress-egress position. In some embodiments, one or more movements of the juvenile seat 14 relative to the seat base 12 are possible including pivoting, rotating, and/or translating. In each case, the juvenile-seat supports 150 can be deployed to support the juvenile seat 14 in the ingress-egress position.

The following numbered clauses include embodiments that are contemplated and non-limiting:
Clause 1. A child restraint includes a seat base adapted to rest on a vehicle seat for transportation in a vehicle.
Clause 2. The child restraint of clause 1, any other suitable clause, or any suitable combination of clauses, including a juvenile seat coupled to the seat base and adapted to hold and secure a child for transportation in the vehicle.
Clause 3. The child restraint of clause 2, any other suitable clause, or any suitable combination of clauses, wherein the juvenile seat is pivotable relative to the seat base about at least one axis offset laterally from a front-to-back centerline of the seat base to move the juvenile seat and the child seated in the juvenile seat from a travel position overlying the seat base inside a cabin of the vehicle to an ingress-egress position that is at least partially outside of a door of the vehicle and at least partially offset from the seat base so a caregiver can easily place or remove the child into and out of the juvenile seat without leaning through the door of the vehicle and into the cabin of the vehicle.
Clause 4. The child restraint of clause 3, any other suitable clause, or any suitable combination of clauses, including a juvenile-seat support coupled to the seat base and movable relative to the seat base from a stored position to a deployed position when the juvenile seat is in the ingress-egress position, in which the juvenile-seat support underlies a portion of the juvenile seat spaced from the seat base to support the juvenile seat while the juvenile seat is in the ingress-egress position.
Clause 5. The child restraint of clause 4, any other suitable clause, or any suitable combination of clauses, wherein the juvenile-seat support is stored in a cavity or formed in the seat base in the stored position and at least a portion of the juvenile-seat support extends from the cavity away from the seat base with the juvenile seat in the deployed position to support the juvenile seat in the ingress-egress position.
Clause 6. The child restraint of clause 5, any other suitable clause, or any suitable combination of clauses, wherein the juvenile seat support is configured to translate relative to the seat base between the stored position and the deployed position.
Clause 7. The child restraint of clause 6, any other suitable clause, or any suitable combination of clauses, wherein the juvenile seat support is configured to translate in a first lateral direction to extend away from a first lateral side of the seat base and the juvenile seat support is configured to translate in a second lateral direction to extend away from a second lateral side of the seat base opposite the first lateral side.
Clause 8. The child restraint of clause 7, any other suitable clause, or any suitable combination of clauses, wherein the support body is formed to include a slot that receives a structure of the seat base to block complete separation of the juvenile-seat support from the cavity, but that allows lateral translation of the juvenile-seat support to the deployed position on both lateral sides of the seat base.
Clause 9. The child restraint of clause 4, any other suitable clause, or any suitable combination of clauses, wherein the juvenile-seat support includes a support body coupled to the seat base and a body extension coupled to a distal end of the support body and configured to engage the juvenile seat in the ingress-egress position when the juvenile-seat support is in the deployed position.
Clause 10. The child restraint of clause 9, any other suitable clause, or any suitable combination of clauses, wherein the body extension is configured to fill a space between an underside of the juvenile seat and a topside of the support body to engage the underside of the juvenile seat and support the juvenile seat above the support body in the ingress-egress position.
Clause 11. The child restraint of clause 9, any other suitable clause, or any suitable combination of clauses, wherein the support body is withdrawn into the cavity in the stored position and the body extension includes a handgrip arranged at least partially outside of the cavity in the stored position and configured to be grasped by a user to move the juvenile-seat support from the stored position to the deployed position.
Clause 12. The child restraint of clause 9, any other suitable clause, or any suitable combination of clauses, wherein the body extension is pivotable relative to the support body about an extension pivot axis from a first position arranged substantially parallel with the support body to a second position arranged at an angle relative to the support body.
Clause 13. The child restraint of clause 12, any other suitable clause, or any suitable combination of clauses, wherein, in the first position, the body extension is spaced apart from the juvenile seat and, in the second position, the body extension engages the underside of the juvenile seat to support the juvenile seat in the ingress-egress position.
Clause 14. The child restraint of clause 4, any other suitable clause, or any suitable combination of clauses, wherein the seat base and the juvenile-seat support cooperate with one another to define a first width when the juvenile-seat support is in the stored position and the seat base and the juvenile-seat support cooperate with one another to define a second width, greater than the first width, in the deployed position.
Clause 15. A child restraint a seat base adapted to rest on a vehicle seat for transportation in a vehicle.
Clause 16. The child restraint of clause 15, any other suitable clause, or any suitable combination of clauses, a juvenile seat coupled to the seat base and adapted to hold and secure a child for transportation in the vehicle, wherein the juvenile seat is movable relative to the seat base from a travel position overlying the seat base to an ingress-egress position at least partially offset from a front-to-back centerline of the seat base.
Clause 17. The child restraint of clause 16, any other suitable clause, or any suitable combination of clauses, a juvenile-seat support coupled to the seat base and movable relative to the seat base from a stored position to a deployed position when the juvenile seat is in the ingress-egress position, in which the juvenile-seat support underlies a portion of the juvenile seat to support the juvenile seat in the ingress-egress position.
Clause 18. The child restraint of clause 17, any other suitable clause, or any suitable combination of clauses, wherein the juvenile-seat support is stored in a cavity or formed in the seat base in the stored position and at least a portion of the juvenile-seat support extends from the cavity away from the seat base with the juvenile seat in the deployed position to support the juvenile seat in the ingress-egress position.
Clause 19. The child restraint of clause 18, any other suitable clause, or any suitable combination of clauses, wherein the juvenile-seat support is configured to translate relative to the seat base between the stored position and the deployed position in a first lateral direction to extend away from a first lateral side of the seat base and the juvenile-seat support is configured to translate in a second lateral direction to extend away from a second lateral side of the seat base opposite the first lateral side.
Clause 20. The child restraint of clause 19, any other suitable clause, or any suitable combination of clauses, wherein the juvenile-seat support is formed to include a slot that receives a structure of the seat base to block complete separation of the juvenile-seat support from the cavity, but that allows lateral translation of the juvenile-seat support to the deployed position on both lateral sides of the seat base.
Clause 21. The child restraint of clause 17, any other suitable clause, or any suitable combination of clauses, wherein the juvenile-seat support includes a support body coupled to the seat base and a body extension coupled to a distal end of the support body and configured to engage the juvenile seat in the ingress-egress position when the juvenile-seat support is in the deployed position.
Clause 22. The child restraint of clause 21, any other suitable clause, or any suitable combination of clauses, wherein the support body is withdrawn into the cavity in the stored position and the body extension includes a handgrip arranged at least partially outside of the cavity in the stored position and configured to be grasped by a user to move the juvenile-seat support from the stored position to the deployed position.
Clause 23. The child restraint of clause 21, any other suitable clause, or any suitable combination of clauses, wherein the body extension is pivotable relative to the support body about an extension pivot axis from a first position arranged substantially parallel with the support body to a second position arranged at an angle relative to the support body.
Clause 24. The child restraint of clause 23, any other suitable clause, or any suitable combination of clauses, wherein, in the first position, the body extension is spaced apart from the juvenile seat and, in the second position, the body extension engages the underside of the juvenile seat to support the juvenile seat in the ingress-egress position.
Clause 25. The child restraint of clause 17, any other suitable clause, or any suitable combination of clauses, wherein the seat base and the juvenile-seat support cooperate with one another to define a first width when the juvenile-seat support is in the stored position and the seat base and the juvenile-seat support cooperate with one another to define a second width, greater than the first width, in the deployed position.

### List of references

- 10: child restraint
- 12: seat base
- 14: juvenile seat
- 15: seat shell
- 17: seat motion-blocker
- 19: central post
- 21: retaining flange
- 22: axis
- 24: axis
- 26: axis
- 28: axis
- 100: front-to-back centerline 100
- 102: lateral centerline
- 150: juvenile-seat support
- 152: cavity
- 154: support body
- 156: body extension
- 158: distal end
- 160: extension pivot axis
- 162: second body extension
- 164: opposite end
- 166: slot

## Claims

1. A child restraint (10) comprising
a seat base (12) adapted to rest on a vehicle seat for transportation in a vehicle,
a juvenile seat (14) coupled to the seat base (12) and adapted to hold and secure a child for transportation in the vehicle, wherein the juvenile seat (14) is movable relative to the seat base (12) from a travel position overlying the seat base (12) to an ingress-egress position at least partially offset from a front-to-back centerline (100) of the seat base (12), and
a juvenile-seat support (150) coupled to the seat base (12) and movable relative to the seat base (12) from a stored position to a deployed position when the juvenile seat (14) is in the ingress-egress position, in which the juvenile-seat support (150) underlies a portion of the juvenile seat (14) to support the juvenile seat (14) in the ingress-egress position.

2. A child restraint (10) according to claim 1, **characterized in that** the juvenile seat (14) is pivotable relative to the seat base (12) about at least one axis (22, 24, 26, 28) offset laterally from a front-to-back of the seat base (12) to move the juvenile seat (14) and the child seated in the juvenile seat (14) from a travel position overlying the seat base (12) inside a cabin of the vehicle to an ingress-egress position that is at least partially outside of a door of the vehicle and at least partially offset from the seat base (12) so a caregiver can easily place or remove the child into and out of the juvenile seat (14) without leaning through the door of the vehicle and into the cabin of the vehicle.

3. The child restraint (10) according to claim 1 or 3, **characterized in that** the juvenile-seat support (150) is stored in a cavity (152) or formed in the seat base (12) in the stored position and at least a portion of the juvenile-seat support (150) extends from the cavity (152) away from the seat base (12) with the juvenile seat (14) in the deployed position to support the juvenile seat (14) in the ingress-egress position.

4. The child restraint (10) according to claim 1, 2 or 3, **characterized in that** the juvenile seat (14) support is configured to translate relative to the seat base (12) between the stored position and the deployed position.

5. The child restraint (10) according to one of the preceding claims, **characterized in that** the juvenile seat (14) support is configured to translate in a first lateral direction to extend away from a first lateral side of the seat base (12) and the juvenile seat (14) support is configured to translate in a second lateral direction to extend away from a second lateral side of the seat base (12) opposite the first lateral side.

6. The child restraint (10) according to claim 5, **characterized in that** the juvenile-seat support (150) is configured to translate relative to the seat base (12) between the stored position and the deployed position in a first lateral direction to extend away from a first lateral side of the seat base (12) and the juvenile-seat support (150) is configured to translate in a second lateral direction to extend away from a second lateral side of the seat base (12) opposite the first lateral side.

7. The child restraint (10) according to one of the preceding claims, **characterized in that** the support body (154) is formed to include a slot (166) that receives a structure of the seat base (12) to block complete separation of the juvenile-seat support (150) from the cavity (152), but that allows lateral translation of the juvenile-seat support (150) to the deployed position on both lateral sides of the seat base (12).

8. The child restraint (10) according to one of the preceding claims, **characterized in that** the juvenile-seat support (150) includes a support body (154) coupled to the seat base (12) and a body extension (156, 162) coupled to a distal end (158) of the support body (154) and configured to engage the juvenile seat (14) in the ingress-egress position when the juvenile-seat support (150) is in the deployed position.

9. The child restraint (10) according to claim 8, **characterized in that** the body extension (156, 162) is configured to fill a space between an underside of the juvenile seat (14) (14) and a topside of the support body (154) to engage the underside of the juvenile seat (14) and support the juvenile (14) seat above the support body (154) in the ingress-egress position.

10. The child restraint (10) according to claim 8 or 9, **characterized in that** the support body (154) is withdrawn into the cavity (152) in the stored position and the body extension (156, 162) includes a handgrip arranged at least partially outside of the cavity (152) in the stored position and configured to be grasped by a user to move the juvenile-seat support (150) from the stored position to the deployed position.

11. The child restraint (10) according to claim 8, 9 or 10, **characterized in that** the body extension (156, 162) is pivotable relative to the support body (154) about an extension pivot axis (160) from a first position arranged substantially parallel with the support body (154) to a second position arranged at an angle relative to the support body (154).

12. The child restraint (10) according to one of the preceding claims 7-11, **characterized in that** in the first position, the body extension (156, 162) is spaced apart from the juvenile seat (14) and, in the second position, the body extension (156, 162) engages the underside of the juvenile seat (14) to support the (14) in the ingress-egress position.

13. The child restraint (10) according to one of the preceding claims, **characterized in that** the seat base (12) and the juvenile-seat support (150) cooperate with one another to define a first width when the juvenile-seat support (150) is in the stored position and the seat base (12) and the juvenile-seat support (150) cooperate with one another to define a second width, greater than the first width, in the deployed position.
